# EUROPÄISCHE PATENTSCHRIFT

(11) **EP 4 336 057 B1**
(45) Veröffentlichungstag und Bekanntmachung des Hinweises auf die Patenterteilung: **14.05.2025**
(21) Anmeldenummer: 23194780.5
(22) Anmeldetag: 01.09.2023
(51) Int. Cl.: F16B 25/00

(54) **VERFAHREN ZUR HERSTELLUNG EINER BIMETALLSCHRAUBE, GRUNDKÖRPER EINER BIMETALLSCHRAUBE, SOWIE BIMETALLSCHRAUBE**
METHOD FOR PRODUCING A BIMETALLIC SCREW, BASE BODY OF A BIMETALLIC SCREW, AND BIMETALLIC SCREW
PROCÉDÉ DE FABRICATION D'UNE VIS BIMÉTALLIQUE, CORPS DE BASE D'UNE VIS BIMÉTALLIQUE ET VIS BIMÉTALLIQUE

(30) Priorität: 12.09.2022 DE 102022123111
(43) Veröffentlichungstag der Anmeldung: 13.03.2024
(73) Patentinhaber: fischerwerke GmbH & Co. KG, 72178 Waldachtal (DE)
(72) Erfinder: Echle, Benjamin, 77709 Oberwolfach (DE); Wälder, Jonas, 71106 Magstadt (DE); Theurer, Florian, 72227 Egenhausen (DE); Salzer, Benedikt, 75365 Calw-Alzenberg (DE)
(74) Vertreter: Suchy, Ulrich Johannes

(56) Entgegenhaltungen:
- WO-A1-2018/007195
- WO-A1-97/16652
- DE-A1- 2 549 147
- TW-A- 200 911 409
- US-A1- 2005 244 247

## Beschreibung

Die Erfindung betrifft ein Verfahren zur Herstellung einer Bimetallschraube mit den Merkmalen des Oberbegriffs des Anspruchs 1 sowie einen Grundkörper einer Bimetallschraube gemäß dem Oberbegriff des Anspruchs 7.

Aus der europäischen Patentanmeldung EP 3 674 028 A1 ist ein Verfahren zur Herstellung einer Bimetallschraube bekannt, bei der zwei Teile der Bimetallschraube vor dem Walzen eines Außengewindes der Schraube miteinander verschweißt werden. Dabei werden zwei Rohlinge, die denselben Außendurchmesser aufweisen, flächig aneinandergefügt und an der Kontaktstelle mittels Laserstrahlschweißen miteinander verschweißt.

Eine weitere gattungsgemäße Bimetallschraube ist aus der europäischen Patentanmeldung EP 3 536 812 A1 bekannt. Diese Schraube ist speziell als Betonschraube ausgebildet. Hergestellt wird die Schraube durch das Verschweißen von zwei Teilen zu einem Grundkörper, wobei ein Gewinde vor dem Verschweißen auf die Rohlinge der beiden zu verschweißenden Teile gewalzt wird. US 2005/244247 A1 beschreibt ein bekanntes Verfahren zur Herstellung einer Bimetallschraube.

Aufgabe der Erfindung ist, eine Bimetallschraube vorzuschlagen, deren Herstellung verbessert ist.

Diese Aufgabe wird erfindungsgemäß durch ein Verfahren mit den Merkmalen des Anspruchs 1 sowie einen Grundkörper mit den Merkmalen des Anspruchs 7 gelöst. Das erfindungsgemäße Verfahren dient zur Herstellung einer erfindungsgemäßen Bimetallschraube, insbesondere einer Betonschraube. Eine "Bimetallschraube" ist im Sinne der Erfindung eine Schraube, die einen in Einbringrichtung vorderen ersten Schaftteil und einen zweiten Schaftteil umfasst, die in Richtung einer Längsachse der Schraube hintereinander angeordnet und an einer Schweißstelle miteinander verschweißt sind. Hier und nachfolgend werden die Begriffe "Schraube" und "Bimetallschraube" synonym verwendet. Die Längsachse bildet insbesondere die Mittellängsachse der Schraube.

Eine Betonschraube ist eine spezielle Art von Schraube, die in ein in einem mineralischen Verankerungsgrund vorgebohrtes Bohrloch eingeschraubt werden kann, insbesondere in Beton, wobei die Schraube sich ihren Gewindegang in dem Verankerungsgrund selbstständig als Innengewinde schneidet.

Mit "in Einbringrichtung vorderer erster Schaftteil" ist der Teil des Schafts der Schraube gemeint, der beim planmäßigen Einbringen der Schraube in ein Bohrloch zuerst in das Bohrloch gelangt.

Der vordere erste Schaftteil der erfindungsgemäßen Bimetallschraube ist zum Bohren und/oder zum Schneiden beziehungsweise Formen eines Innengewindes in einem Werkstoff vorgesehen und wird aus einem ersten Rohling aus einem ersten Stahl hergestellt, der derart härtbar ist, dass der vordere erste Schaftteil nach dem Härten zum Bohren, Schneiden oder Einformen eines Gewindes in ein Bohrloch geeignet ist. Insbesondere weist der vordere Schaftteil einer als Betonschraube ausgestalteten erfindungsgemäßen Bimetallschraube im gebrauchsfertigen Zustand im Bereich eines Gewindes eine Härte von mindestens 50 HRC, insbesondere von mindestens 55 HRC auf, um ein Formen des Innengewindes durch ein Einschneiden des Gewindes beim Eindrehen der Schraube in ein Bohrloch im Beton zu gewährleisten. Der vordere erste Schaftteil besteht daher insbesondere aus einem ersten Rohling aus einem härtbaren Stahl, insbesondere aus einem Kohlenstoffstahl. Das Härten erfolgt regelmäßig nach dem Walzen des Gewindes. Um das Formen des Innengewindes zu erleichtern, kann das Gewinde Schneidzähne aufweisen.

Der zweite, hintere Schaftteil der erfindungsgemäßen Bimetallschraube besteht aus einem zweiten Rohling aus einem zweiten Stahl, dessen Kohlenstoffkonzentration geringer ist als die Kohlenstoffkonzentration des ersten Stahls des vorderen ersten Schaftteils. Insbesondere ist der zweite Stahl korrosionsbeständiger als der erste Stahl und für Befestigungselemente geeignet, die im Außenbereich eingesetzt werden. Der erste Rohling ist insbesondere kürzer als der zweite Rohling, damit der zweite, korrosionsbeständigere Schaftteil weit in ein Bohrloch eingreifen kann, um auch trotz Witterungseinflüssen im Außenbereich eine gute Tragfähigkeit der Schraube im Verankerungsgrund dauerhaft zu gewährleisten.

Derartige Bimetallschrauben sind einem Fachmann bekannt und werden typischerweise im Außenbereich eines Gebäudes oder in feuchten Innenbereichen eingesetzt, wobei der vordere erste Schaftteil das Bohren, Schneiden und/oder Gewindeformen übernimmt, während der hintere zweite Schaftteil eine dauerhafte Tragfähigkeit der Bimetallschraube gewährleistet.

Die beiden Rohlinge der beiden Schaftteile sind insbesondere im Wesentlichen zylinderförmig, wobei der Rohling des ersten Schaftteils erfindungsgemäß lokal eine Art Nut aufweist, wie dies unten beschrieben ist. An dem Rohling des zweiten Schaftteils kann zudem ein Kopfabschnitt, insbesondere in Form eines typischen Schraubenkopfs einstückig angeordnet sein, beispielsweise durch Kaltmassivumformung. Alternativ kann der Kopfabschnitt nach dem Verschweißen am Grundkörper angeformt werden. Der Schraubenkopf kann beispielsweise als Senkkopf mit eingeprägter Bitaufnahme oder Sechskantkopf ausgeformt sein, wie dies aus dem Stand der Technik bekannt ist. Der Kopfabschnitt kann alternativ auch als zweites Außengewinde ausgestaltet sein, das sich vom Gewinde unterscheidet, das zum Einschneiden in den Verankerungsgrund vorgesehen ist. Insbesondere ist das zweite Außengewinde ein metrisches Gewinde, wie dies aus dem Stand der Technik bekannt ist. Der Kopfabschnitt wird insbesondere an dem zweiten Schaftteil durch Umformen angeformt, bildet aber geometrisch kein Teil des zweiten Schaftteils.

Die beiden Rohlinge werden üblicherweise aus einem Drahtmaterial hergestellt. Sie werden erfindungsgemäß zu einem Grundkörper der Bimetallschraube miteinander verschweißt. Nachfolgend kann das Gewinde auf diesen Grundkörper gewalzt werden. Der Grundkörper bildet dann ein Zwischenprodukt vor dem Walzen des Gewindes. Alternativ kann das Gewinde bereits vor dem Verschweißen der Schaftteile an den Schaftteilen ausgebildet werden. Insbesondere erstreckt sich das Gewinde nach dem Verschweißen und dem Gewindewalzen in Längsrichtung vom ersten Schaftteil über eine nach dem Verschweißen zwischen den Schaftteilen angeordnete Schweißnaht zum zweiten Schaftteil und ist insbesondere auch im Bereich der Schweißnaht nicht unterbrochen. Insbesondere kann sich das Gewinde vollständig über den ersten Schaftteil erstrecken, wobei vorne im Bereich des vorderen Schraubenendes ein Gewindeanlauf vorgesehen sein kann, der sich beispielsweise über eine Umdrehung des Gewindes erstreckt. Dagegen endet das Gewinde typischerweise am zweiten Schaftteil mit Abstand vor dem Kopfabschnitt. Mit "vorne" bzw. "vorderes Ende" ist das Ende der Schraube gemeint, das sich in Einbringrichtung der Schraube in das Bohrloch vorne befindet. "Hinten" bzw. "hinteres Ende" meint das entgegengesetzte Ende der Schraube.

Beim Verschweißen entsteht im ersten Schaftteil nahe der Schweißnaht durch das Erhitzen und das schnelle Abkühlen eine harte Wärmeeinflusszone, die eine Härte aufweist, die über der Härte des ersten Rohlings und über der des vorderen Endes des ersten Schaftteils nach dem Verschweißen der Rohlinge liegt. Durch das Verschweißen wird das erste Schaftteil im Bereich der Wärmeeinflusszone gehärtet. Um zu verhindern, dass diese harte Wärmeeinflusszone beim nachfolgenden Gewindewalzen in Kontakt mit den Walzbacken kommt, was zu einer Beschädigung oder zumindest zu einer deutlich reduzierten Standzeit der Walzbacken führen würde, weist der Rohling des ersten Schaftteils erfindungsgemäß einen ersten Abschnitt auf, dessen Durchmesser kleiner als der maximale Durchmesser des Rohlings des ersten Schaftteils ist. Insbesondere ist dieser erste Abschnitt in der hinteren Hälfte des Rohlings des ersten Schaftteils angeordnet, insbesondere im hinteren Drittel dieses Rohlings. Bei der Bestimmung der Durchmesser bleiben Abschnitte, in denen nachfolgend kein Gewinde geformt wird, unberücksichtigt. Insbesondere ist der maximale Durchmesser des Rohlings des ersten Schaftteils gleich groß wie oder größer als ein maximaler Durchmesser des Rohlings des zweiten Schaftteils.

Bei der Ermittlung der maximalen Durchmesser der beiden Schaftteile werden Bereiche der Bimetallschraube, die bei der fertig hergestellten Bimetallschraube gewindefrei sind, nicht berücksichtigt, insbesondere auch nicht der Kopfabschnitt, der kein Teil des zweiten Schaftabschnitts bildet. Bei einem nicht-kreisrunden Querschnitt ist der Durchmesser der Durchmesser eines den jeweiligen Querschnitt umschreibenden Kreises, dessen Mittelpunkt auf der Längsachse der Bimetallschraube liegt.

Der erste Abschnitt wird im Rohling des ersten Schaftteils derart angeordnet, dass sich die harte Wärmeeinflusszone im Bereich des ersten Abschnitts bildet. Die Wärmeeinflusszone liegt somit innerhalb einer den Rohling umhüllenden Mantelfläche. Wird das Gewinde nach dem Verschweißen durch Gewindewalzen hergestellt, kommen die Walzbacken daher nicht direkt in Kontakt mit dem beim Verschweißen gehärteten Material der Wärmeeinflusszone, da diese einen Durchmesser aufweist, der kleiner ist als die maximalen Durchmesser der Rohlinge. Insbesondere kann beim nachfolgenden Gewindewalzen Material aus den nach dem Verschweißen an den ersten Abschnitt angrenzenden Abschnitten mit größerem Durchmesser als weichere Deckschicht über die harte Wärmeeinflusszone gewalzt beziehungsweise gedrückt werden. Diese Deckschicht befindet sich dann zwischen den Walzbacken und der Wärmeeinflusszone. Sie kann vollflächig umlaufend sein und die Wärmeeinflusszone nach außen vollständig abdecken oder auch nur begrenzt lokal oder punktuell ausgebildet sein. Dadurch werden die Walzbacken vor einer Beschädigung und/oder einer zu großen Abnutzung geschützt und ihre Lebensdauer verlängert. Das erfindungsgemäße Verfahren verringert daher Ausfall- und Wartungszeiten, was eine sichere und kostengünstige Herstellung der Schraube ermöglicht.

Gemäß der Erfindung grenzt der erste Abschnitt in Richtung der Längsachse beidseitig an Abschnitte des Rohlings des ersten Schaftteils an, deren Durchmesser größer als der Durchmesser des ersten Abschnitts sind. Ein hinterer der beiden Abschnitte, der vor dem Verschweißen zwischen der Schweißstelle und dem ersten Abschnitt angeordnet ist, wird nachfolgend dritter Abschnitt genannt, während der Abschnitt, der zum freien Ende der Schraubenspitze nach vorne an den ersten Abschnitt grenzt, nachfolgend zweiter Abschnitt genannt wird.

Um auch im ersten Schaftteil ein ausreichend großes Gewinde ausformen zu können, ist es vorteilhaft, wenn der hintere, dritte Abschnitt in Richtung der Längsachse kürzer als der vordere, zweite Abschnitt ist.

Insbesondere weist der Rohling des ersten Schaftteils vor dem Verschweißen in einem Bereich, der dem Rohling des zweiten Schaftteils zugewandt ist, den gleichen Durchmesser und/oder Querschnitt auf, wie der Rohling des zweiten Schaftteils an der Schweißstelle, so dass die Schweißnaht möglichst beide Querschnitte vollflächig erfasst. Insbesondere ist der Durchmesser des zweiten und/oder des dritten Abschnitts gleich dem maximalen Durchmesser des Rohlings des ersten Schaftteils und/oder mindestens gleich groß wie oder größer als der Durchmesser des zweiten Schaftteils.

Vorzugsweise ist der erste Abschnitt als eine in Umfangsrichtung um die Längsachse um den Rohling des ersten Schaftteils umlaufende Nut ausgebildet, die insbesondere kreisringförmig um die Längsachse verläuft und die beidseitig in Richtung der Längsachse durch jeweils eine Nutwand begrenzt ist. Vorzugsweise verläuft zumindest eine Nutwand, insbesondere eine vordere, erste Nutwand in einem spitzen Winkel zur Längsachse, insbesondere in einem Winkel zwischen 5 Grad und 30 Grad. Dies ist vorteilhaft für das nachfolgende Gewindewalzen. Insbesondere verläuft die andere Nutwand, insbesondere die hintere, zweite Nutwand, nicht geneigt, sondern orthogonal zur Längsachse. Dadurch kann der sich vor dem Verschweißen zwischen der Nut und dem hinteren Ende des Rohlings des ersten Schaftteils befindliche Abschnitt in Längsrichtung kurz gehalten werden.

Vorzugsweise werden die beiden Rohlinge der Schaftteile mittels Laserstrahlschweißen miteinander zum Grundkörper verschweißt. Durch das Laserstrahlschweißen wird die Bildung einer unerwünschten Wulst im Bereich der Schweißnaht vermieden, wie sie beispielsweise beim bekannten Reibschweißen entsteht, die durch einen weiteren Verfahrensschritt, beispielsweise durch Abdrehen, wieder entfernt werden müsste. Beim Verschweißen rotiert vorzugsweise keiner der Rohlinge der Schaftteile und/oder der Laserstrahl um die Längsachse, sondern die Rohlinge werden insbesondere gemeinsam linear durch den Laserstrahl oder der Laserstrahl linear durch die Rohlinge geführt, was eine relativ kurze Prozessdauer für das Verschweißen und einen hohen Durchsatz durch die Schweißanlage ermöglicht.

Beim Verschweißen sind die beiden Rohlinge vorzugsweise zunächst voneinander beabstandet, wodurch eine leicht eingefallene Schweißnaht entsteht. Beim Verschweißen füllt sich der Freiraum zwischen den beiden Schaftteilen mit dem Materialgemisch der beim Schweißvorgang sich vermischenden Stähle der beiden Rohlinge. Das Materialgemisch bildet die Schweißnaht, also eine Vermischungszone der beiden Stähle.

In einem weiteren Schritt des erfindungsgemäßen Verfahrens wird nach dem Verschweißen der beiden Rohlinge zum Grundkörper ein Gewinde gewalzt und ein Kern des Gewindes geformt. Dabei wird Material einer beim Verschweißen entstandenen Vermischungszone der Schweißstelle zumindest lokal, insbesondere in dem Bereich, in dem die Gewindeflanken ausgebildet werden, insbesondere im Wesentlichen über den gesamten Umfang, radial außen über das Material einer bei Verschweißen entstandenen Wärmeeinflusszone bewegt.

Beim Grundkörper definiert die Vermischungszone die Schweißnaht, in der die Stähle des ersten Schaftteils und des zweiten Schaftteils vermischt sind. Diese Vermischungszone ist kein Bestandteil des ersten oder des zweiten Schaftteils, die jeweils nur den ersten oder den zweiten Stahl aufweisen.

Die "Wärmeeinflusszone" ist der Bereich des ersten Stahls, der beim Schweißvorgang stark erwärmt wird und dann wieder abkühlt, ohne in das Materialgemisch überzugehen. Sie grenzt im Grundkörper an die Vermischungszone, also an die Schweißnaht an. Die Wärmeeinflusszone bildet sich beim Verschweißen im Rohling des ersten Schaftteils, also im ersten Stahl, und ist Bestandteil des ersten Schaftteils des Grundkörpers.

Bei dem erfindungsgemäßen Verfahren wird beim Walzen des Gewindes vorzugsweise das Materialgemisch der die Schweißnaht bildenden Vermischungszone radial außen über die Wärmeeinflusszone zumindest lokal, insbesondere in dem Bereich, in dem die Gewindeflanken ausgebildet werden, insbesondere im Wesentlichen über den gesamten Umfang, bewegt, derart, dass das Materialgemisch die Wärmeeinflusszone radial außen umgibt, wobei sie eine Außenfläche des Kerns und damit die oben beschriebene Deckschicht bildet.

Der erfindungsgemäße Grundkörper einer Bimetallschraube, der ein Zwischenprodukt beim Herstellen der erfindungsgemäßen Bimetallschraube vor dem Walzen des Gewindes ist, wird insbesondere nach dem erfindungsgemäßen Verfahren hergestellt.

Der Grundkörper umfasst den ersten Schaftteil und den zweiten Schaftteil, die in Richtung der Längsachse der herzustellenden Bimetallschraube hintereinander angeordnet und durch eine Schweißnaht miteinander verbunden sind. Wie es oben bereits beschrieben wurde, ist der erste Schaftteil aus einem ersten Rohling aus einem ersten Stahl und der zweite Schaftteil aus einem zweiten Rohling aus einem zweiten Stahl, dessen Kohlenstoffkonzentration geringer ist als die Kohlenstoffkonzentration des ersten Stahls, hergestellt. Durch das Verschweißen der beiden Rohlinge an der Schweißstelle wird die Schweißnaht gebildet, die Bestandteil des Grundkörpers ist, der zumindest aus der Schweißnaht und den beiden miteinander verschweißten Schaftteilen besteht.

Kennzeichnend für den erfindungsgemäßen Grundkörper ist, dass ein kleinster Durchmesser und/oder die kleinste Querschnittsfläche des Grundkörpers im Bereich des ersten Schaftteils und/oder auf der dem ersten Schaftteil zugewandten Seite der Schweißstelle liegt. Durch diese Ausgestaltungsform des erfindungsgemäßen Grundkörpers kann bei einem nachfolgenden Walzen des Gewindes auf einfache Weise Material, insbesondere vom Materialgemisch der Vermischungszone, außen über die Wärmeeinflusszone zur Bildung der Deckschicht bewegt werden, zumindest lokal, insbesondere in dem Bereich, in dem die Gewindeflanken ausgebildet werden, insbesondere im Wesentlichen über den gesamten Umfang.

Vorzugsweise liegt der kleinste Durchmesser und/oder die kleinste Querschnittsfläche außerhalb der Schweißnaht. Vorzugsweise liegt der kleinste Durchmesser und/oder die kleinste Querschnittsfläche im Bereich oder in unmittelbarer Nähe der Wärmeeinflusszone. Vorzugsweise liegt der kleinste Durchmesser und/oder die kleinste Querschnittsfläche im ersten Schaftteil.

Als "unmittelbare Nähe" wird hier eine Entfernung angesehen, die maximal 30 Prozent des kleinsten Durchmessers des Grundkörpers nach dem Verschweißen und vor dem Walzen des Gewindes oder anderen Umformungen entspricht, insbesondere von maximal 15 Prozent dieses kleinsten Durchmessers, wobei bei der Ermittlung des "kleinsten Durchmessers" ein eventuell vorhandener vorderer, insbesondere konisch zulaufender Spitzenbereich nicht berücksichtigt wird.

Die Bimetallschraube, insbesondere eine Betonschraube, weist einen ersten Schaftteil und einen zweiten Schaftteil auf, die in Richtung einer Längsachse der Bimetallschraube hintereinander angeordnet und durch eine Schweißnaht miteinander verbunden sind. Der erste Schaftteil ist aus einem ersten Stahl und der zweite Schaftteil aus einem zweiten Stahl, dessen Kohlenstoffkonzentration geringer ist als die Kohlenstoffkonzentration des ersten Stahls, hergestellt. Die beiden Schaftteile bilden mit der Schweißnaht einen Schaft der Bimetallschraube, der einen Kern und ein auf einer Außenfläche des Kerns um den Kern angeordnetes Gewinde aufweist. Das Gewinde ist ein Außengewinde zum Einschneiden eines Innengewindes in einen Baustoff, insbesondere in Beton.

Kennzeichnend für die Bimetallschraube ist, dass eine beim Verschweißen der beiden Schaftteile im ersten Schaftteil entstehende Wärmeeinflusszone nicht bis zur Außenfläche des Kerns reicht.

Bei einer bevorzugten Ausgestaltungsform der Bimetallschraube umgibt das Materialgemisch der beim Verschweißen der beiden Schaftteile als Schweißnaht entstehenden Vermischungszone der beiden Stähle die Wärmeeinflusszone radial nach außen als Deckschicht, derart, dass das Materialgemisch der Vermischungszone die Außenfläche des Kerns bildet. Die Deckschicht überdeckt die Wärmeeinflusszone zumindest lokal, insbesondere in dem Bereich, in dem die Gewindeflanken ausgebildet werden, insbesondere im Wesentlichen über den gesamten Umfang.

Vorzugsweise ist die Bimetallschraube nach dem oben beschriebenen erfindungsgemäßen Verfahren und/oder aus dem oben beschriebenen erfindungsgemäßen Grundköper hergestellt. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden. Ausführungen der Erfindung, die nicht alle Merkmale des Ausführungsbeispiels aufweisen, sind möglich.

Die Erfindung wird nachfolgend anhand eines in den Figuren dargestellten Ausführungsbeispiels näher erläutert.

Es zeigen:
- Figur 1: eine Betonschraube in einer Seitenansicht
- Figur 2: den Grundkörper der Betonschraube der Figur 1 in einer im Bereich der Schweißstelle geschnittenen Seitenansicht;
- Figur 3: eine Detaildarstellung der beiden Rohlinge der Schaftteile des Grundkörpers der Figur 2 vor dem Verschweißen in einer Seitenansicht; und
- Figur 4: eine teilweise geschnittene Detailansicht eines vorderen Teils der Betonschraube der Figur 1.

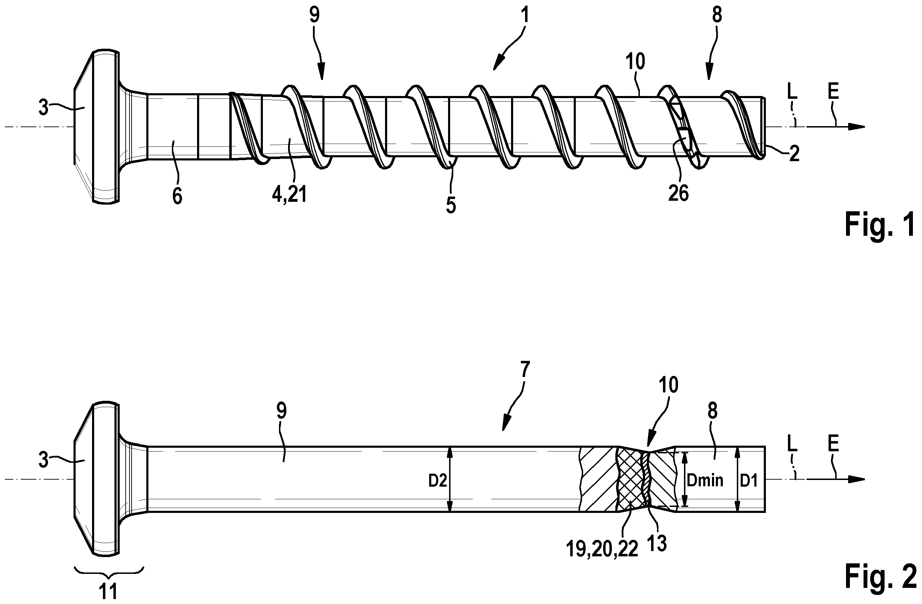

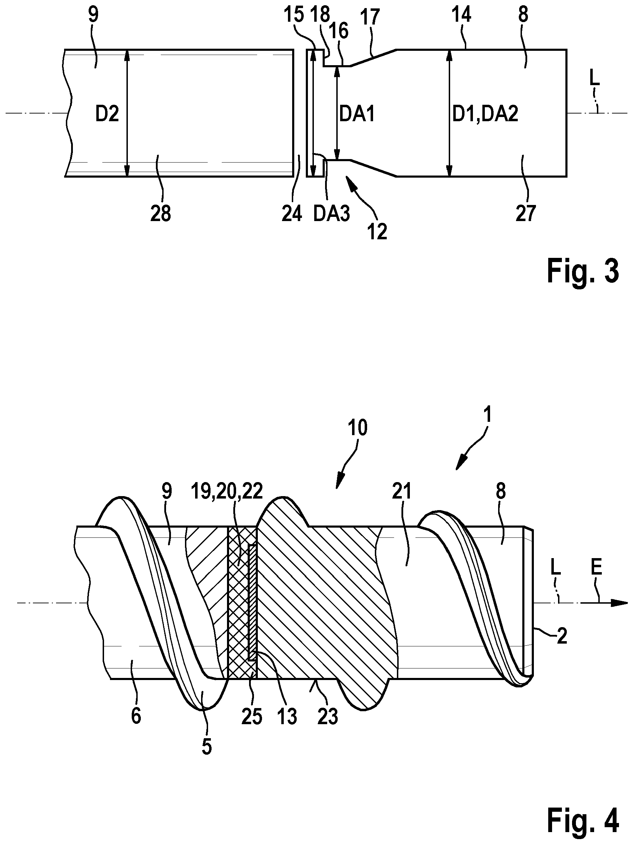

In Figur 1 ist eine Bimetallschraube 1, hier in Form einer Betonschraube, dargestellt. Die Bimetallschraube 1, nachfolgend auch Schraube 1 genannt, weist ein ebenes vorderes Ende 2 auf. Die Schraube 1 erstreckt sich vom vorderen Ende 2 entlang einer Längsachse L bis zu einem linsenförmigen Schraubenkopf 3, der das hintere Ende der Bimetallschraube 1 bildet. Das vordere Ende 2 ist das Ende der Schraube 1, das beim planmäßigen Einschrauben der Schraube 1 in ein Bohrloch (nicht dargestellt) in Einbringrichtung E als erstes in das Bohrloch gelangt. Ein Schaft 4 der Schraube 1 weist ein Gewinde 5 auf, das durch Gewindewalzen auf einer Außenfläche 23 eines Kerns 21 des Gewindes 5 ausgebildet ist. Das Gewinde 5 ist umlaufend am Kern 21 angeordnet und es erstreckt sich vom vorderen Ende 2 bis zu einem gewindefreien Schaftabschnitt 6 der Schraube 1. Der gewindefreie Schaftabschnitt 6 ist zwischen dem Schraubenkopf 3 und dem Gewinde 5 angeordnet. Das Gewinde 5 ist ein Außengewinde, das im Bereich eines vorderen ersten Schaftteils 8, der mit einem hinteren zweiten Schaftteil 9 und einer, in Figur 1 nicht zu sehenden Schweißnaht 22 (vgl. Figur 4) den Schaft 4 bildet, gehärtet ist, um ein Einschneiden in die Bohrlochwand in einem mineralischen Baustoff, beispielsweise in Beton, zu ermöglichen. Schneidzähne 26 erleichtern das Einschneiden.

Die Schraube 1 wurde durch Gewindewalzen aus dem in Figur 2 dargestellten Grundkörper 7 hergestellt. Der Grundkörper 7 umfasst den ersten Schaftteil 8 und den zweiten Schaftteil 9, die in Richtung der Längsachse L der Schraube 1 hintereinander angeordnet und an einer Schweißstelle 10 miteinander mittels Laserstrahlschweißen miteinander verschweißt und mit der Schweißnaht 22 miteinander verbunden sind, die ebenfalls ein Teil des Grundkörpers 7 bildet.

Beide Schaftteile 8, 9 sind zylindrisch, wobei der erste Schaftteil 8 in Richtung der Längsachse L kürzer als der zweite Schaftteil 9 ist. Der erste Schaftteil 8 ist aus einem ersten Stahl und der zweite Schaftteil 9 aus einem zweiten Stahl hergestellt. Beispielsweise durch Kaltmassivumformung wurde der Schraubenkopf 3 am zweiten Schaftteil 9 einstückig angeformt. Der Schraubenkopf 3 bildet mit einem Übergangsbereich den Kopfabschnitt 11, der aber geometrisch kein Teil des zweiten Schaftteils 9 ist.

Der erste Stahl ist in diesem Fall ein Stahl, der härtbar ist und dessen Kohlenstoffkonzentration größer ist als die des zweiten Stahls. Der erste Schaftteil 8 ist zylindrisch und weist in einem vorderen Bereich einen maximalen Durchmesser D1 auf, der im Wesentlichen dem maximalen Durchmesser D2 des zweiten Schaftteils 9 entspricht. Der maximale Durchmesser D1 des ersten Schaftteils 8 entspricht dem maximalen Durchmesser D1 eines Rohlings 27 des ersten Schaftteils 8, der maximale Durchmesser D2 des zweiten Schaftteils 9 entspricht dem maximalen Durchmesser D2 eines Rohlings 28 des zweiten Schaftteils 9.

In Figur 3 sind die beiden Rohlinge 27, 28 der Schaftteile 8, 9 des Grundkörpers 7 vor dem Verschweißen dargestellt. Der Rohling 27 des ersten Schaftteils 8 weist eine in Umfangsrichtung um die Längsachse L umlaufende Nut 16 auf, die einen ersten Abschnitt 12 bildet, dessen Durchmesser DA1 kleiner ist als die maximalen Durchmesser D1, D2 der beiden Rohlinge 27, 28. Die Nut 16 ist, in Richtung der Längsachse L gesehen, beidseitig von jeweils einer Nutwand 17, 18 begrenzt. Eine vordere erste Nutwand 17 ist um ungefähr 20 Grad gegen die Längsachse L geneigt, so dass sich die Nut 16 radial zur Längsachse L nach außen in ihrer Breite in Richtung der Längsachse L erweitert. Die hintere zweite Nutwand 18 dagegen verläuft orthogonal zur Längsachse L. In Richtung der Längsachse L grenzt die Nut 16 beidseitig an Abschnitte 14, 15 an, deren Durchmesser DA2, DA3 größer als der Durchmesser DA1 des ersten Abschnitts 12 und damit dem der Nut 16 ist. Die Durchmesser DA2, DA3 des zweiten Abschnitts 14 und des dritten Abschnitts 15 entsprechen im vorliegenden Fall dem maximalen Durchmesser D1 des Rohlings 27 des ersten Schaftteils 8 und somit dem maximalen Durchmesser D2 des Rohlings 28 des zweiten Schaftteils 9.

Die beiden Rohlinge 27, 28 können vor dem Verschweißen koaxial an Grundbeziehungsweise Deckflächen aneinandergelegt werden. Alternativ können die beiden Schaftteile 8, 9 zu Beginn des Schweißvorgangs beabstandet sein, so dass ein kleiner Freiraum 24 zwischen den beiden Schaftteilen 8, 9 besteht, wie dies in Figur 3 zu sehen ist. Mittels Laserstrahlschweißen werden die beiden Rohlinge 27, 28 miteinander an der Schweißstelle 10 verschweißt, wodurch eine Schweißnaht 22 entsteht. Die Schweißnaht 22 ist ein Materialgemisch 19 aus dem ersten Stahl und dem zweiten Stahl. Sie bildet eine Vermischungszone 20 der beiden Stähle (Figur 2). Ist vor dem Verschweißen ein Freiraum 24 vorhanden, so füllt das Materialgemisch 19 diesen nach dem Verschweißen zumindest teilweise aus. Die Rohlinge 27, 28 bilden nach dem Verschweißen als Schaftteile 8, 9 gemeinsam mit der Schweißnaht 22 Teile des Grundkörpers 7.

Nach dem Verschweißen der beiden Schaftteile 8, 9 zum Grundkörper 7 liegt ein kleinster Durchmesser Dmin des Grundkörpers 7, und somit im dargestellten Beispiel auch die kleinste Querschnittsfläche des Grundkörpers 7, im Bereich des ersten Schaftteils 8, außerhalb der beim Verschweißen als Schweißnaht 22 entstandenen Vermischungszone 20 und in unmittelbarer Nähe der Wärmeeinflusszone 13 des ersten Schaftteils 8. Die Wärmeeinflusszone 13 grenzt unmittelbar an das Materialgemisch 19 der Schweißnaht 22 an und ist durch das Erhitzen und Abkühlen des ersten Stahls des Rohlings 27 des ersten Schaftteils 8 mit höherer Kohlenstoffkonzentration entstanden.

Durch den im Bereich beziehungsweise in der Nähe der Wärmeeinflusszone 13 geringeren Durchmesser Dmin kann bei dem nach dem Verschweißen der beiden Rohlinge 27, 28 der Schaftteile 8, 9 sich anschließenden Walzen des Gewindes 5 und dem Ausformen des Kerns 21 das, im Verhältnis zur Wärmeeinflusszone 13, weiche Materialgemisch 19 der Vermischungszone 20 radial außen über die Wärmeeinflusszone 13 bewegt werden. Im Ausführungsbeispiel umgibt das Materialgemisch 19 die Wärmeeinflusszone 13 als Deckschicht 25 radial außen und bildet eine Außenfläche 23 des Kerns 21 (Figur 4). Beim Walzen des Gewindes 5 kommen Walzbacken somit nicht direkt in Kontakt mit der harten Wärmeeinflusszone 13, was zu einem erhöhten Verschleiß der Walzbacken oder deren Beschädigung führen würde.

Wie in Figur 4 zu sehen ist, reicht die Wärmeeinflusszone 13 der nach dem erfindungsgemäßen Verfahren hergestellten Bimetallschraube 1 somit nicht bis zur Außenfläche 23 des Kerns 21 der Bimetallschraube 1, sondern das Materialgemisch 19 der beim Verschweißen der beiden Schaftteile 8, 9 entstandenen Vermischungszone 20 umgibt die Wärmeeinflusszone 13 radial nach außen als Deckschicht 25, derart, dass das Materialgemisch 19 der Vermischungszone 20 die Außenfläche 23 des Kerns 21 bildet.

Durch das erfindungsgemäße Verfahren lassen sich auf kostengünstige und zuverlässige Art und Weise erfindungsgemäße Grundkörper 7 herstellen.

### Bezugszeichenliste

### Verfahren zur Herstellung einer Bimetallschraube, Grundkörper einer Bimetallschraube, sowie Bimetallschraube

- 1: Bimetallschraube, Schraube
- 2: vorderes Ende der (Bimetall-) Schraube 1
- 3: Schraubenkopf
- 4: Schaft
- 5: Gewinde
- 6: gewindefreier Schaftabschnitt
- 7: Grundkörper
- 8: erster Schaftteil
- 9: zweiter Schaftteil
- 10: Schweißstelle
- 11: Kopfabschnitt
- 12: erster Abschnitt des ersten Schaftteils 8
- 13: Wärmeeinflusszone im ersten Schaftteil 8
- 14: zweiter Abschnitt des ersten Schaftteils 8
- 15: dritter Abschnitt des ersten Schaftteils 8
- 16: Nut
- 17: erste Nutwand
- 18: zweite Nutwand
- 19: Materialgemisch
- 20: Vermischungszone
- 21: Kern
- 22: Schweißnaht
- 23: Außenfläche des Kerns 21
- 24: Freiraum
- 25: Deckschicht
- 26: Schneidzahn
- 27: Rohling des ersten Schaftteils 8
- 28: Rohling des zweiten Schaftteils 9

- D1: maximaler Durchmesser des Rohlings 27 des ersten Schaftteils 8
- D2: maximaler Durchmesser des Rohlings 28 des zweiten Schaftteils 9
- DA1: Durchmesser des ersten Abschnitts 12 beziehungsweise der Nut 16
- DA2: Durchmesser des zweiten Abschnitts 14
- DA3: Durchmesser des dritten Abschnitts 15
- Dmin: kleinster Durchmesser des Grundkörpers 7

- E: Einbringrichtung
- L: Längsachse

## Patentansprüche

1. Verfahren zur Herstellung einer Bimetallschraube (1), insbesondere einer Betonschraube, die einen ersten Schaftteil (8) und einen zweiten Schaftteil (9) umfasst, die in Richtung einer Längsachse (L) der Bimetallschraube (1) hintereinander angeordnet und an einer Schweißstelle (10) miteinander verschweißt sind,
wobei der erste Schaftteil (8) aus einem ersten Rohling (27) aus einem ersten Stahl und der zweite Schaftteil (9) aus einem zweiten Rohling (28) aus einem zweiten Stahl, dessen Kohlenstoffkonzentration geringer ist als die Kohlenstoffkonzentration des ersten Stahls, hergestellt wird,
wobei die beiden Rohlinge (27, 28) zu einem Grundkörper (7) der Bimetallschraube (1) miteinander verschweißt werden,
wobei der Rohling (27) des ersten Schaftteils (8) einen ersten Abschnitt (12) aufweist, dessen Durchmesser (DA1) kleiner als der maximale Durchesser (D1) des Rohlings (27) des ersten Schaftteils (8) ist, **dadurch gekennzeichnet, dass** der erste Abschnitt (12) in Richtung der Längsachse (L) beidseitig an Abschnitte (14, 15) des Rohlings (27) des ersten Schaftteils (8) grenzt, deren Durchmesser (DA2, DA3) größer als der Durchmesser (DA1) des ersten Abschnitts (12) sind.

2. Verfahren nach Anspruch 1, **dadurch gekennzeichnet, dass** der erste Abschnitt (12) als eine in Umfangsrichtung um die Längsachse (L) umlaufende Nut (16) ausgebildet ist, die beidseitig durch jeweils eine Nutwand (17, 18) begrenzt ist.

3. Verfahren nach Anspruch 2, **dadurch gekennzeichnet, dass** zumindest eine erste Nutwand (17) in einem spitzen Winkel zur Längsachse (L) verläuft, und insbesondere die zweite Nutwand (18) orthogonal zur Längsachse (L) verläuft.

4. Verfahren nach einem der vorstehenden Ansprüche, **dadurch gekennzeichnet, dass** die beiden Rohlinge (27, 28) der Schaftteile (8, 9) mittels Laserstrahlschweißen miteinander verschweißt werden.

5. Verfahren nach Anspruch 4, **dadurch gekennzeichnet, dass** keiner der Rohlinge (27, 28) der Schaftteile (8, 9) und/oder der Laserstrahl beim Verschweißen um die Längsachse (L) rotiert.

6. Verfahren nach einem der vorstehenden Ansprüche, **dadurch gekennzeichnet, dass** die beiden Rohlinge (27, 28) der Schaftteile (8, 9) zu Beginn des Verschweißens voneinander beabstandet sind.

7. Grundkörper (7) einer Bimetallschraube (1), hergestellt nach einem Verfahren gemäß der vorstehenden Ansprüche.

## Claims

1. A method for manufacturing a bimetal screw (1), in particular a concrete screw, which comprises a first shank part (8) and a second shank part (9) which are arranged one behind the other in the direction of a longitudinal axis (L) of the bimetal screw (1) and are welded to one another at a weld (10),
wherein the first shank part (8) is produced from a first blank (27) made of a first steel and the second shank part (9) is produced from a second blank (28) made of a second steel whose carbon concentration is lower than the carbon concentration of the first steel,
the two blanks (27, 28) being welded together to form a base body (7) of the bimetal screw (1),
the blank (27) of the first shank part (8) having a first section (12) whose diameter (DA1) is smaller than the maximum diameter (D1) of the blank (27) of the first shank part (8), **characterized in that** the first section (12) borders, in the direction of the longitudinal axis (L), on both sides on sections (14, 15) of the blank (27) of the first shank part (8), the diameter (DA2, DA3) of which is greater than the diameter (DA1) of the first section (12).

2. A method according to claim 1, **characterized in that** the first section (12) is formed as a groove (16) running in the circumferential direction around the longitudinal axis (L), which is bounded on both sides by a groove wall (17, 18).

3. A method according to claim 2, **characterized in that** at least one first groove wall (17) extends at an acute angle to the longitudinal axis (L), and in particular the second groove wall (18) extends orthogonally to the longitudinal axis (L).

4. A method according to one of the preceding claims, **characterized in that** the two blanks (27, 28) of the shaft parts (8, 9) are welded together by means of laser beam welding.

5. A method according to claim 4, **characterized in that** none of the blanks (27, 28) of the shaft parts (8, 9) and/or the laser beam rotates about the longitudinal axis (L) during welding.

6. A method according to one of the preceding claims, **characterized in that,** the two blanks (27, 28) of the shaft parts (8, 9) are spaced apart from each other at the beginning of the welding.

7. A base body (7) of a bimetal screw (1), manufactured by a method according to the preceding claims.

## Revendications

1. Procédé de fabrication d'une vis bimétallique (1), en particulier d'une vis à béton, qui comprend une première partie de tige (8) et une deuxième partie de tige (9), qui sont disposées l'une derrière l'autre dans le direction d'un axe longitudinal (L) de la vis bimétallique (1) et sont soudées l'une à l'autre au niveau d'un point de soudure (10),
dans lequel la première partie de tige (8) est fabriquée à partir d'une première ébauche (27) d'un premier acier et la deuxième partie de tige (9) à partir d'une deuxième ébauche (28) d'un deuxième acier dont la concentration en carbone est inférieure à la concentration en carbone du premier acier,
dans lequel les deux ébauches (27, 28) sont soudées l'une à l'autre pour former un corps de base (7) de la vis bimétallique (1),
dans lequel l'ébauche (27) de la première partie de tige (8) présente une première section (12) dont le diamètre (DA1) est inférieur au diamètre maximal (D1) de l'ébauche (27) de la première partie de tige (8),
**caractérisé en ce que** la première segment (12) est délimité des deux côtés dans la direction de l'axe longitudinal (L) par des segment (14, 15) de l'ébauche (27) de la première partie de tige (8), dont les diamètres (DA2, DA3) sont supérieurs au diamètre (DA1) du premier segment (12).

2. Procédé selon la revendication 1, **caractérisé en ce que** le premier segment (12) est conçu comme une rainure (16) périphérique autour de l'axe longitudinal (L), qui est délimitée des deux côtés par une paroi de rainure (17, 18).

3. Procédé selon la revendication 2, **caractérisé en ce qu'**au moins une première paroi de rainure (17) s'étend selon un angle aigu par rapport à l'axe longitudinal (L), et en particulier la deuxième paroi de rainure (18) s'étend orthogonalement à l'axe longitudinal (L).

4. Procédé selon l'une des revendications précédentes, **caractérisé en ce que** les deux ébauches (27, 28) des parties de tige (8, 9) sont soudées l'une à l'autre par soudage au laser.

5. Procédé selon la revendication 4, **caractérisé en ce qu'**aucune des ébauches (27, 28) des parties de tige (8, 9) et/ou le faisceau laser ne tourne autour de l'axe longitudinal (L) lors du soudage.

6. Procédé selon l'une des revendications précédentes, **caractérisé en ce que** les deux ébauches (27, 28) des parties de tige (8, 9) sont espacées l'une de l'autre au début du soudage.

7. Corps de base (7) d'une vis bimétallique (1), fabriqué selon un procédé selon les revendications précédentes.
